(19) **Europäisches Patentamt / European Patent Office / Office européen des brevets**

(11) **EP 4 641 938 A2**

(12) **EUROPEAN PATENT APPLICATION**

(43) Date of publication:
29.10.2025 Bulletin 2025/44

(21) Application number: 25171587.6

(22) Date of filing: 22.04.2025

(51) International Patent Classification (IPC):
*H04B 7/024* (2017.01)  *H04B 7/04* (2017.01)
*H04B 7/06* (2006.01)

(52) Cooperative Patent Classification (CPC):
H04B 7/0617; H04B 7/06958

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 23.04.2024  IN 202441032007
14.04.2025  US 202519178297

(71) Applicant: **Cambium Networks Ltd
Ashburton, Devon TQ13 7UP (GB)**

(72) Inventors:
• **SHEKHAR, Arvind
560037 Bangalore (IN)**
• **JAYARAM, Hariprasad Nandavara
560037 Bangalore (IN)**

(74) Representative: **EIP
Fairfax House
15 Fulwood Place
London WC1V 6HU (GB)**

(54) **SMART ANTENNA SYSTEM AND METHOD OF OPERATION OF SMART ANTENNA SYSTEM**

(57)     A smart antenna system is configured to generate an initial weight set from an indication of desired azimuth and elevation steering angle and from an indication of frequency, to generate a plurality of further weight sets from the initial weight set, the further weight sets each being for the same azimuth and elevation steering angle, and for the initial weight set and for each of the plurality of further weight sets, generating a respective quantised wight set and generating an indication of side lobe level for each respective quantised weight set. A weight set is selected from the generated quantised weight sets for application to an antenna array on the basis of the indications of side lobe level.

Figure 1

## Description

<u>Technical Field</u>

The present invention relates generally to a smart antenna system and to a method of operation of a smart antenna system, and in particular, but not exclusively, to a system and method for side lobe reduction in a smart antenna system comprising a controllable antenna array having a plurality of antenna elements, each antenna element being controllable by a quantised element weight value.

<u>Background</u>

Modern wireless communication networks are typically placed under great demands to provide high data capacity within the constraints of the allocated signal frequency spectrum. To achieve a high data capacity, it is beneficial to transmit and receive signals with a high signal to noise ratio. To improve signal to noise ratio, increasing use is made of smart antenna systems comprising controllable antenna arrays, which typically comprise a number of antenna elements, each of which has a transmission phase and/or amplitude that is controllable by application of a respective antenna weight value. The antenna weight values may be generated to form a beam for transmission and/or reception in the direction of a desired azimuth and elevation steering angle, for example to receive a wanted signal and to reject other signals. Typically, a radiation pattern formed by the controllable antenna array is generated to form a main beam at a desired steering angle, but the radiation pattern may also have unwanted side lobes having a gain less than that of the main beam in other directions. The side lobes may receive signals other than the wanted signal which may reduce the signal to noise ration of the received wanted signal.

It would be beneficial to provide a smart antenna system having reduced side lobe levels.

<u>Summary</u>

In accordance with a first aspect of the invention there is provided a smart antenna system comprising: a controllable antenna array comprising a plurality of antenna elements, each antenna element having a phase shifter controllable by application of a quantised element weight value to control a transmission phase of a signal for transmission by the antenna element; a control system configured to accept an indication of desired azimuth and elevation steering angle and to generate a processed weight set comprising a plurality of quantised element weight values, each quantised element weight value being for application to a respective phase shifter to cause the controllable antenna array to generate a beam in the direction of the desired azimuth and elevation steering angle, wherein the control system is configured to generate the processed weight set by: generating an initial weight set from the indication of desired azimuth and elevation steering angle and from an indication of frequency; generating a plurality of further weight sets from the initial weight set, the further weight sets each being for the same azimuth and elevation steering angle; and for the initial weight set and for each of the plurality of further weight sets, generating a respective quantised wight set and generating an indication of side lobe level for each respective quantised weight set; and selecting the processed weight set from the generated quantised weight sets on the basis of the indications of side lobe level.

Generating a plurality of different quantised weight sets having the same desired azimuth and elevation steering angle has the effect of producing weight sets having similar but slightly different radiation patterns, due, for example, to differences from an ideal weight set introduced by quantisation effects. Such patterns may have similar main beam gain, but different side lobe levels. Generating an indication of side lobe level for each respective quantised weight set using a control processor and selecting a weight set on the basis of the indication of side lobe level allows a weight set to be applied to the controllable antenna array that has reduced side lobe levels. This allows a coarse degree of quantisation of the phase applied by the quantised weight set, for example quantisation in steps of 45 degrees or greater, for example 60 degree steps, allowing an efficient and economical implementation of a phase shifter while providing good side lobe performance.

In an example, the control system is configured to generate each of the plurality of further weight sets by adding a constant phase rotation for the respective further weight set to each element weight value of the initial weight set.

Adding a constant phase rotation, which may be positive or negative, to each element weight value has the effect, in the absence of quantisation effects or other imperfections, of keeping the radiation pattern the same and simply changing the transmission phase of the beam that is formed. This allows the desired azimuth and elevation direction to be maintained, while generating slightly different patterns that may have different side lobe levels due to quantisation effects or the effects of other imperfections.

In an example, the constant phase rotation is incremented by a constant value between for each further weight set, the increment having a constant value for example between 1 and 10 degrees for each weight set, for example 5 or 8 degrees. The values of the respective constant phase rotations for the further weight sets may be distributed evenly between 0 and 360 degrees. For example, there may be 45 steps of 8 degrees giving 45 weight sets with rotations in a range of 360 degrees. This provides an efficient method of generating the further weight sets having the same desired azimuth and elevation angle but different quantisation effects.

In an example, generating the indication of side lobe level for each of the respective quantised weight sets comprises generating an array factor. The array factor is typically based the intended frequency of operation for weight set and the relative positions of the antenna elements, assuming isotropic radiation from an antenna element. This allows for an efficient calculation, which may be performed in a limited time period between a change in desired azimuth and elevation angle and/or frequency. The array factor may be sufficient to indicate which weight set has the lowest sidelobe levels, without needing to calculate the radiation pattern including the effects of non-isotropic radiation from the antenna elements, thereby saving computational resources.

In an example, the control system comprises a register transfer level RTL based digital module to generate the array factor. For example, the control system may be implemented by a field programmable gate array (FPGA) or an application specific integrated circuit (ASIC). This allows an efficient and rapid calculation of array factor.

In an example, the antenna elements of the controllable antenna array are arranged a plurality of rows and a plurality of columns, and the digital module is configured to generate the array factor by processing the weight values for each row in parallel, or alternatively or in addition, by processing the weight values for each column in parallel. Partitioning between serial and parallel processing in this way provides for an effective trade-off between processing speed and firmware/hardware resources.

In an example, the control system is configured to generate the processed weight set in real time in response to receiving an indication of a desired azimuth and elevation steering angle and/or frequency.

This provided a resource-efficient and flexible system.

In accordance with a second aspect of the invention, there is provided a method of controlling a smart antenna system comprising a controllable antenna array having a plurality of antenna elements, each antenna element having a phase shifter controllable by application of a quantised element weight value to control a transmission phase of a signal for transmission by the antenna element, the method comprising: receiving an indication of desired azimuth and elevation steering angle; in response to receiving the indication of desired azimuth and elevation steering angle, generating a processed weight set comprising a plurality of quantised element weight values, each quantised element weight value being for application to a respective phase shifter to cause the controllable antenna array to generate a beam in the direction of the desired azimuth and elevation steering angle, wherein generating the processed weight set is by: generating an initial weight set from the indication of desired azimuth and elevation steering angle and from an indication of frequency; generating a plurality of further weight sets from the initial weight set, the further weight sets each being for the same azimuth and elevation steering angle; and for the initial weight set and for each of the plurality of further weight sets, generating a respective quantised weight set and generating an indication of side lobe level for each respective quantised weight set; and selecting the processed weight set from the generated quantised weight sets on the basis of the indications of side lobe level.

Further features of the invention will be apparent from the following description of preferred embodiments of the invention, which are given by way of example only.

Brief Description of the Drawings

Figure 1 is a schematic diagram illustrating a smart antenna system comprising a controllable antenna array and a control system;

Figure 2 is a schematic diagram illustrating generation of further weight sets from an initial weight set by rotation of the phase of each weight in a weight set by the same amount;

Figure 3 is a schematic diagram of the controllable antenna array showing antenna elements having a radiating element and a phase shifter to control the transmission phase of transmitted and/or received signals;

Figure 4 is a flow diagram illustrating an example of an array factor compute and grating lobe search function;

Figure 5 is a flow diagram illustrating a first example of an array factor compute function implemented by a combination of parallel and serial processing;

Figure 6 is a flow diagram illustrating a second example of an array factor compute function implemented by a combination of parallel and serial processing;

Figure 7 is a block diagram illustrating an example of a control system for a controllable antenna array;

Figure 8 is a schematic diagram illustrating an example of implementation of an array factor compute module;

Figure 9 shows a radiation pattern for a quantised initial weight set in azimuth and elevation showing a side lobe level of -8.85 dB;

Figure 10 shows a radiation pattern for a quantised processed weight set in azimuth and elevation showing a side lobe level of -10.13 dB after weight set selection; and

Figure 11 is a flow diagram of a method of controlling a smart antenna system comprising a controllable antenna array having a plurality of antenna elements, each antenna element having a phase shifter controllable by application of a quantised element weight value to control a transmission phase of a signal for transmission by the antenna element.

Detailed Description

By way of example, embodiments of the invention will now be described in the context of a smart antenna system for operation in frequency band in the region of 4 - 8 GHz, and in particular at 5 GHz, but it will be understood that embodiments of the invention are not restricted to operation in this range, and that smart antenna systems may be designed to operate at higher or lower frequencies.

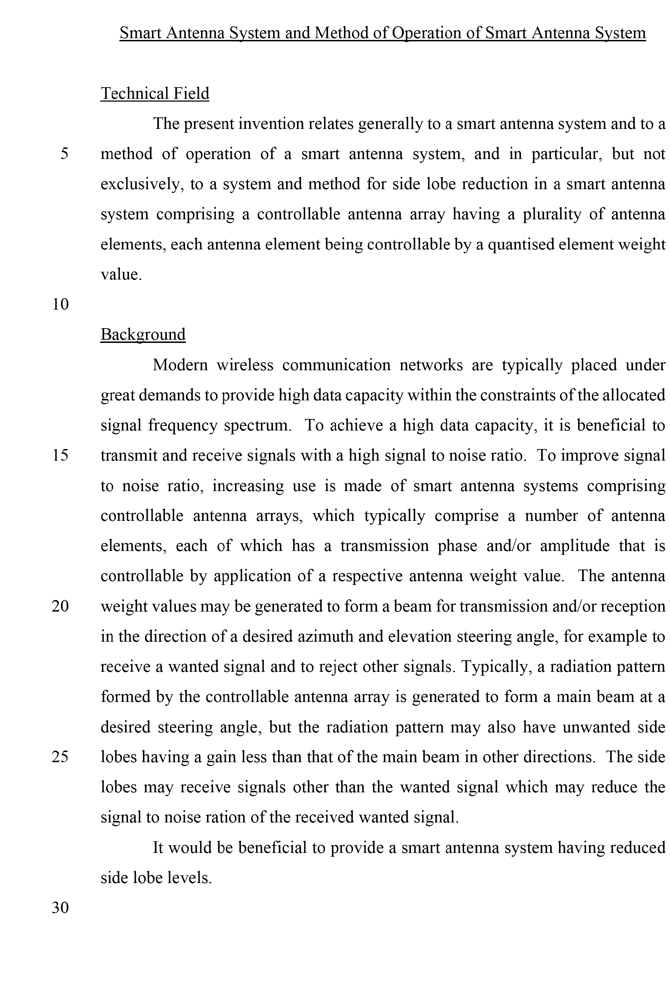

Figure 1 illustrates a smart antenna system comprising a controllable antenna array 1 and a control system 3 for the antenna array. In addition, the smart antenna system may also comprise additional components and features, for example for determining a desired azimuth and elevation direction and a desired frequency. The controllable antenna array 1 comprises a number of antenna elements 2, each antenna element 2 having an analogue phase shifter controllable by application of a quantised element weight value to control a transmission phase of a signal for transmission by the antenna element. The quantised weight element value may be coarsely quantised, for example to select a phase in 60 degree steps, having 6 states to cover 360 degrees. This may be controlled by a 3 bit weight. The advantage of such coarse quantisation is that it may be efficiently and cheaply implemented, for example by selection of alternative path lengths by radio frequency switches. However, the coarse quantisation may lead to some distortion from an intended radiation pattern that would result from ideal, unquantized, weights, which may lead to higher side lobe levels. Side lobes are parts of the radiation pattern outside the mean beam that give local peaks in the magnitude of the radiation pattern. Side lobes are generally unwanted and may degrade a signal to noise of a wanted signal by receiving interference signals, and on transmit, the side lobes may radiate signals in unintended directions. It is therefore beneficial to reduce side lobe levels where possible.

As described in this disclosure, an initial weight set is generated to produce a radiation pattern having a main beam in an intended direction. The initial weight set is then used to generate further weight sets having a main beam in the same direction as for the initial weight set, but using different weight values. The different weight values may be generated by adding a constant phase offset to each element value, using a different constant phase offset for each further weight set. This will generate the same pattern, for ideal weights before quantisation, but uses weights that may fall differently with respect to quantisation thresholds. As a result, although the main beam will be close to the same direction for each further weight set, the exact shape of the radiation pattern, and in particular the side lobe levels, may be different. The constant phase offset will cause a change in transmission phase, but this is generally of little consequence.

As described in this disclosure, a side lobe level is calculated for each quantised weight set, and a quantised weight set is selected for application to the controllable antenna array on the basis of the side lobe level, for example the weight set having the lowest magnitude side lobe in an array factor pattern may be selected. The calculation and selection may be performed in real time in a period between selection of a new desired azimuth, elevation and frequency for a main beam and application of the selected quantised weight set to the controllable antenna array. For speed and efficiency of implementation, the array factor may be calculated by a register transfer level RTL based digital module to generate the array factor. For example, the calculation may be implemented by a field programmable gate array (FPGA) or an application specific integrated circuit (ASIC) using parallel processing.

In the example illustrated in Figure 1, the antenna array has 48 antenna elements 2 arranged as six rows and eight columns. However, this example has been chosen for illustration purposes and examples are not limited to this, and other numbers and arrangements of antenna elements are possible within the scope of the disclosure. The antenna elements in the array may be spaced apart by nominally half a wavelength, or in examples by less than half a wavelength to give a more compact array.

As shown in Figure 1, the control system 3 is configured to accept an indication of desired azimuth and elevation steering angle and/or frequency and to generate 4 an initial weight set 5 from the indication of desired azimuth and elevation steering angle and from an indication of frequency. The initial weight set 5 may be generated by calculation based on the geometric relationship between antenna elements and the phase shifts required to give reinforcing interference in the direction of the desired steering angle, for example. The initial weigh set may also be generated using a look up table of pre-calculated values in another example.

A plurality of further weight sets 6, 7, 8 are generated from the initial weight set 5, the further weight sets each being for the same azimuth and elevation steering angle. The further weight sets may be generated by adding or subtracting a phase offset to the initial weight set, or to another of the further weight sets. A respective quantised weight set is generated for the initial weight set and for each of the plurality of further weight sets, for example quantising the weight for each antenna element to steps a certain phase change, for example greater than 20 degrees, greater than 45 degrees, or for example nominally a 60 degree step. For each quantised weight set, an indication of side lobe level is generated 9. A weight set is selected 10 from the generated quantised weight sets on the basis of the indications of side lobe level. For example, the weight set giving the lowest indication of maximum sidelobe level may be selected. The selected quantised weight set is then used as the processed weight set to control the controllable antenna array 1.

The indication of side lobe level for each of the respective quantised weight may be generated by generating an array factor. The array factor is a geometrically calculated factor based the intended frequency of operation for the weight set and the relative positions of the antenna elements, which typically does not take into account the radiation response of an individual antenna element. Calculating the radiation pattern would involve the multiplication of the element response pattern with the array factor for a given direction. Using the array factor to calculate side lobe level, rather than calculating the radiation pattern, allows for an efficient calculation, which may be performed in a limited time period between a change in desired azimuth and elevation angle and/or frequency. The actual phase shift associated with a quantised value may depend on frequency, and on which quantised phase value is selected, due to various inaccuracies in the generation of the analogue phase shift value. A look up table may hold a calibrated value of phase shift for each quantised step for each frequency. The look up table may be used to generate the phase shifts for the quantised weight set used to calculate the array factor. The array factor accordingly provides an accurate estimation of sidelobe level, taking into account inaccuracies in the analogue beamformer applying the quantised phase shifts, and the unevenness and frequency dependence of the quantisation steps.

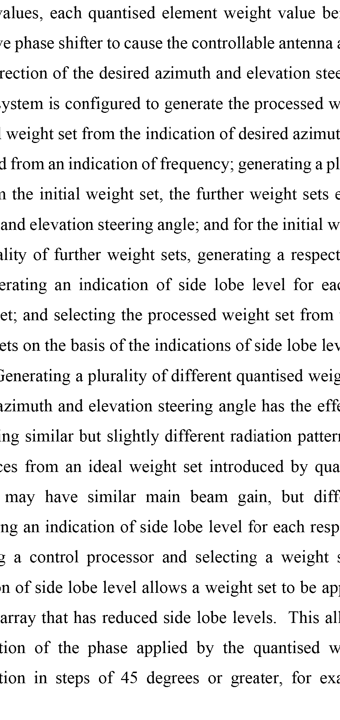

Figure 2 illustrates the generation of the further weight sets 6, 7 by rotation of the initial weight set values, that is to say by applying a positive or negative phase rotation. The phase rotation is incremented by a constant value between for each further weight set, the increment having a constant value for example between 1 and 10 degrees for each weight set, for example 5 degrees. The values of the respective constant phase rotations for the further weight sets may be distributed evenly between 0 and 360 degrees. For example, there may be 45 steps of 8 degrees giving 45 weight sets with rotations in a range of 360 degrees. This provides an efficient method of generating the further weight sets having the same desired azimuth and elevation angle but different quantisation effects. The increment may be in the magnitude of the phase change between the further weight sets. The phase change may have a positive or negative sign.

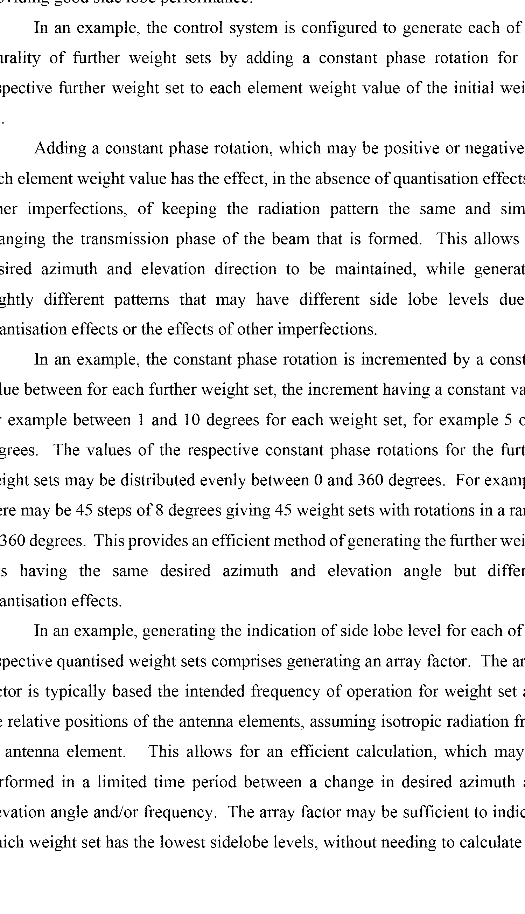

Figure 3 is a schematic diagram of the controllable antenna array showing antenna elements 2a, 2b, 2c having a radiating element 11a, 11b, 11c and a phase shifter 12a, 12b, 12c to control the transmission phase of transmitted and/or received signals. In other examples, the weight value w1, w2, wn applied may be a magnitude and phase weight, for example applied as inphase and quadrature components. The element signals are combined together as shown using a splitter/combiner as appropriate for transmit/receive. The radiating elements 11a, 11b, 11c may be patch antenna elements, or may be other types of antenna element such as dipoles in other examples. The radiating elements may be used in examples for transmission or reception of signals.

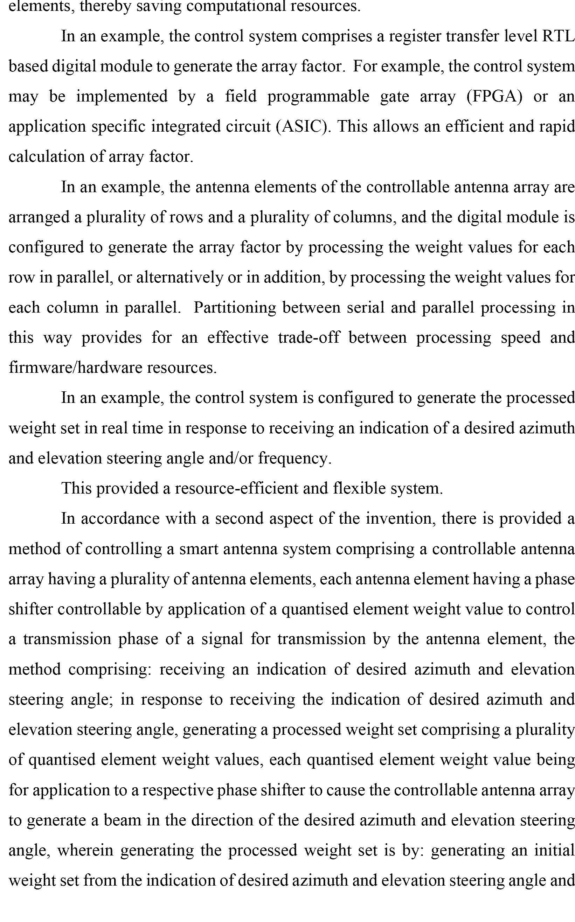

Figure 4 is a flow diagram illustrating an example of an array factor compute and grating lobe search function. For a given weight set n, which may be an initial weight set or a further weight set, a quantised weight set n is generated 21, by applying quantisation thresholds corresponding to control steps of the phase shifter elements of the antenna array elements. For each of a number of directions in a radiation pattern, a contribution to an array factor is calculated 22 from each weighted antenna element. For each direction in the radiation pattern, the calculated contributions are summed 23. The summed contributions are searched 24 at each of the plurality of directions for a maximum sidelobe level for the quantised weight set n. An indication is produced of the maximum sidelobe level for the quantised weight set n. In an example, the plurality of directions over which the side lobe search takes place are distributed evenly over the radiation pattern. The maximum side lobe level, i.e. a peak in the radiation pattern outside the main beam, is detected. In another example, the plurality of directions that are searched are directions where a sidelobe is expected, for example on the basis of a previous detected sidelobe for another weight set, or by calculation of a position where a grating lobe may be expected due to the geometry of the array. This may lead to a more efficient search process.

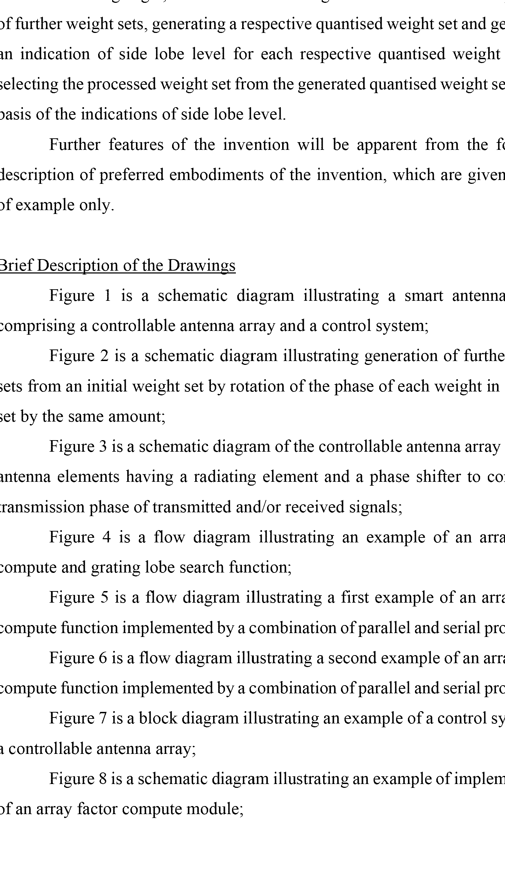

Figure 5 is a flow diagram illustrating a first example of an array factor compute function 25 implemented by a combination of parallel and serial processing. In this example, the array factor for a given direction is calculated for a given quantised weight set n. The process is repeated for a plurality of directions to generate an array factor as a function of direction. For each direction, the contribution to the array factor from each element of a row is calculated by parallel processing 26. In an example, the parallel processing may be implemented in a register transfer level RTL based digital module, for example a field programmable gate array (FPGA) or an application specific integrated circuit (ASIC), This allows an efficient and rapid calculation of array factor. The process may be repeated for each row of a two dimensional antenna element array by serial processing. The contributions to the array factor form each antenna element for a given direction are then summed vectorially to give the array factor in a given radiation direction. Partitioning between serial and parallel processing in this way provides for an effective trade-off between processing speed and firmware/hardware resources.

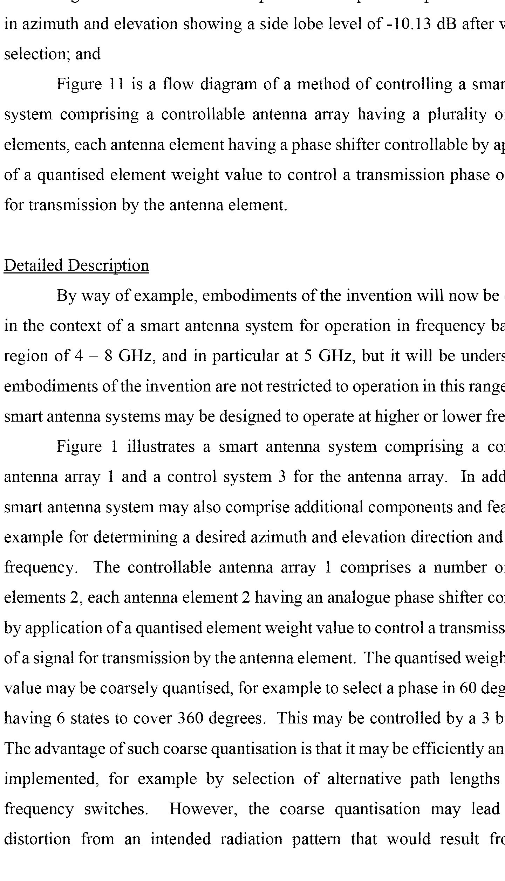

Figure 6 is a flow diagram illustrating a second example of an array factor compute function 29 implemented by a combination of parallel and serial processing. In this case the process is similar to that illustrated by Figure 5, except that the contribution from each element of a column, rather than a row, is calculated by parallel processing 30. This is repeated for each column of a 2D array by serial processing 31, and contributions are summed for a given direction 32 as before, to give an array factor for the given direction.

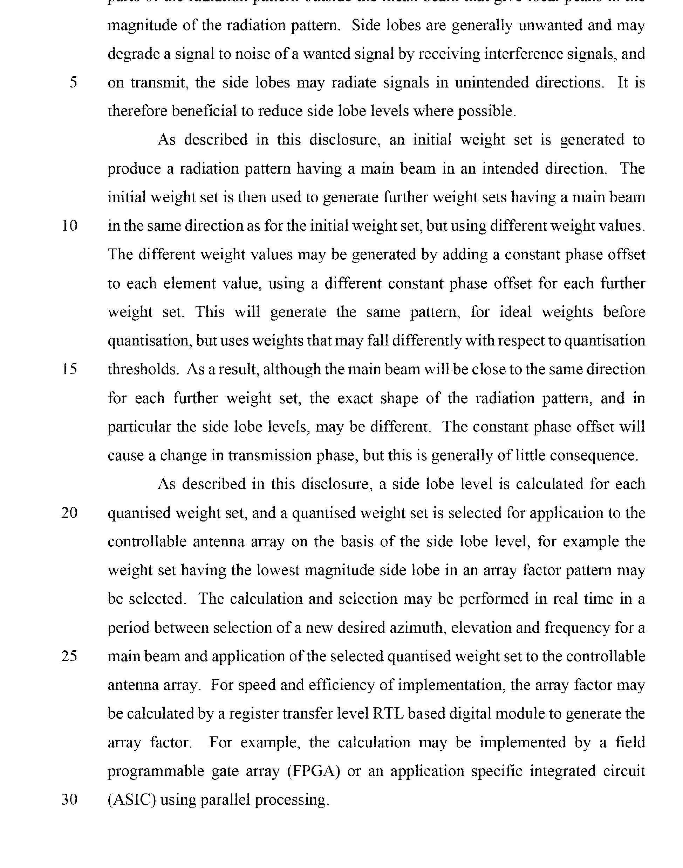

Figure 7 is a block diagram illustrating an example of a control system for a controllable antenna array. A weight set n is held in weights matrix 14. A phase rotation is applied to the weight set by a phase rotation offset module 15. For each weight set, an array factor is computed and a side lobe level, also referred to as a grating lobe level, is searched 16. The array factor is held in memory 17. An indication of side lobe level is passed to a phase rotation selection module 20, which selects the phase rotated weight set having the lowest side lobe levels. The side lobe level as a function of phase rotation may be held in a register space, which is accessible via a register memory map 13. The phase rotation selection is under control of a phase rotation side lobe level controller 19.

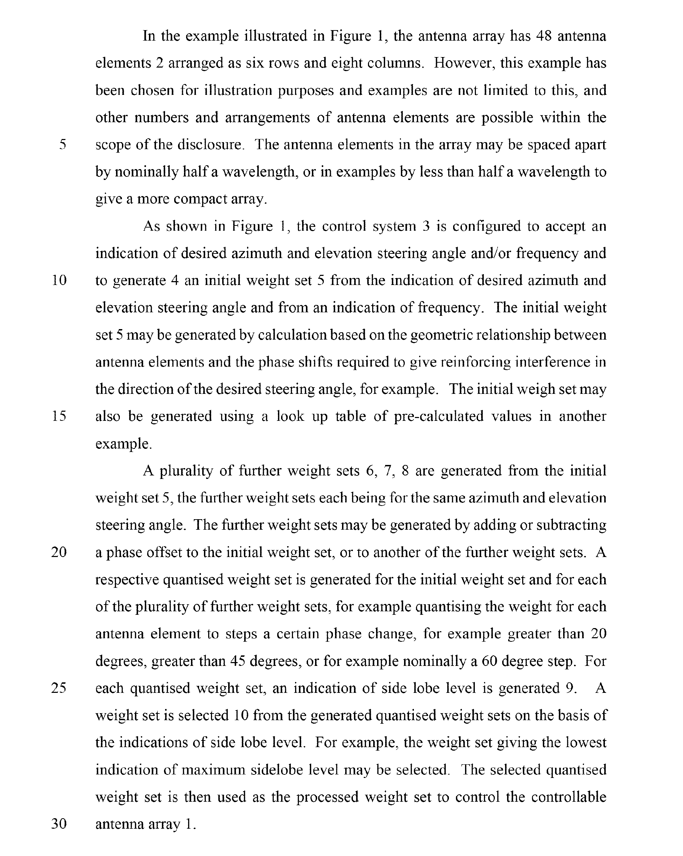

Figure 8 is a schematic diagram illustrating an example of implementation of an array factor compute module, which may be implemented in a register transfer level RTL based digital module, such as in a field programmable grid array (FPGA) including multiplexers (MUX), de-multiplexers (DMUX), look-up tables (LUT) and accumulators (ACC). In a first section 34, the array factor contribution for each antenna element for each of a plurality of directions of the radiation pattern in calculated on the basis of the geometry of the array. In a second section 35, each element weight value is applied. In a third section 36, the weighted contributions to the array factor are summed. The array factor (AF) may be calculated by circuitry configured to implement the following equation. This calculates the array factor as a function of azimuth and elevation direction. The antenna elements are arranged in M columns and N rows in the antenna element array, and each antenna element has a controllable transmission phase controlled by the element weight $w_{nm}$. The weights form a logical phase shifter matrix, corresponding to the radiating element array, as illustrated by Figure 3. The spacing between the elements in the array is d. The contribution of each antenna element, weighted by the appropriate weight value, are summed. The element radiation patterns are assumed to be isotropic for the purposes of calculating the array factor.

$$AF(\theta, \phi) = \sum_{n=1}^{N} \sum_{m=1}^{M} w_{nm} e^{j\frac{2\pi d}{\lambda}\left[\left(n - \frac{N+1}{2}\right)\left(\sin(\theta)\cos(\phi) - \beta_x\right) + \left(m - \frac{M+1}{2}\right)\left(\sin(\theta)\sin(\phi) - \beta_y\right)\right]}$$

*Where (θ, φ) are desired Azimuth and Elevation angles,*
*M,N = No of columns and rows in Phase shifter matrix*
*m,n = column and row index for patch elements*
*betax and betay = Are calculated for desired steering angle*

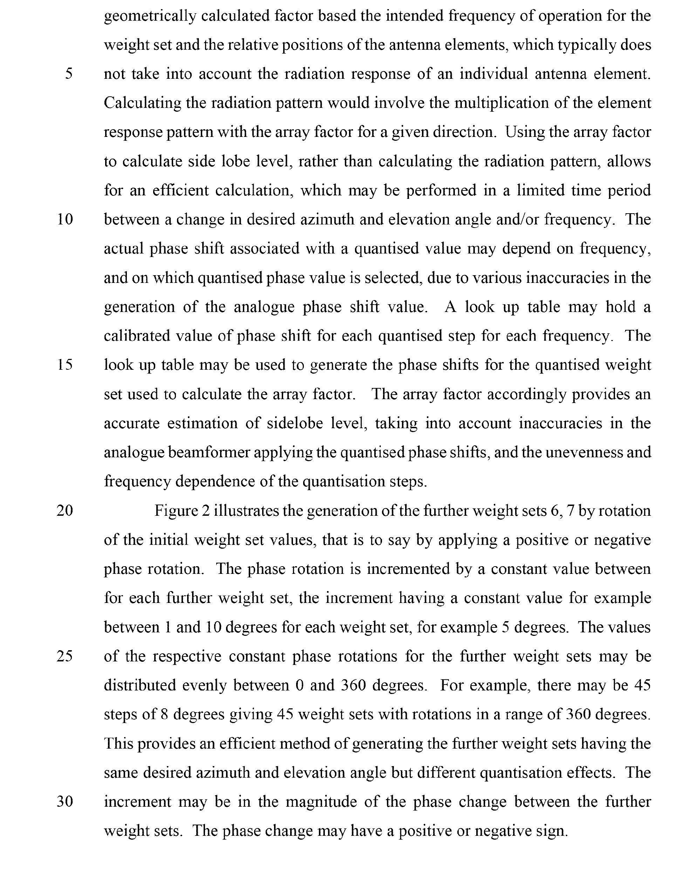

Figure 9 shows a radiation pattern for a quantised initial weight set in azimuth 37 and elevation 38 showing a maximum side lobe level of -8.85 dB. This shows the sidelobe levels before weight set selection.

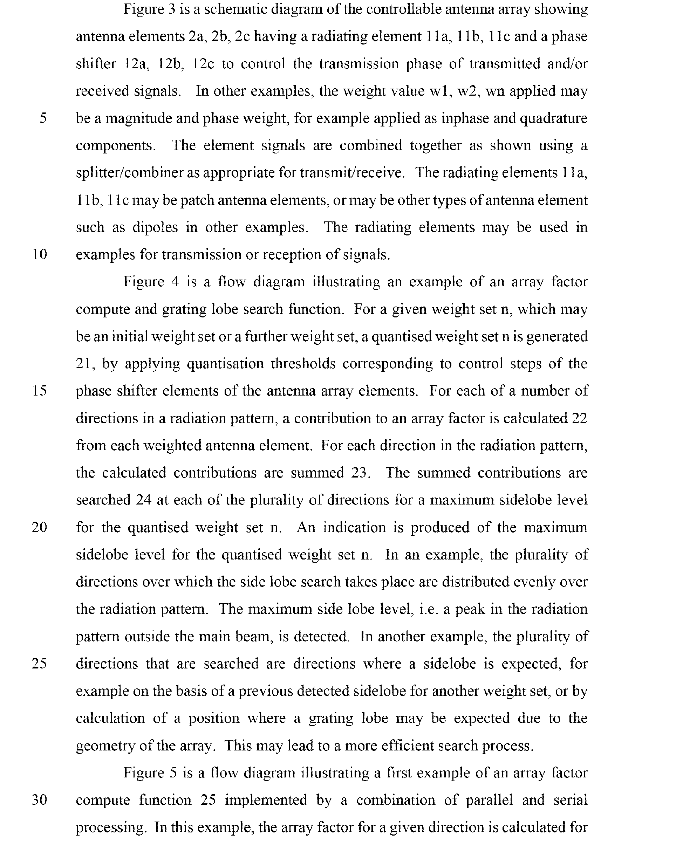

Figure 10 shows a radiation pattern for a quantised processed weight set in azimuth 39 and elevation 40 showing a side lobe level of -10.13 dB after weight set selection. It can be seen that side lobe levels are reduced in the selected weight set.

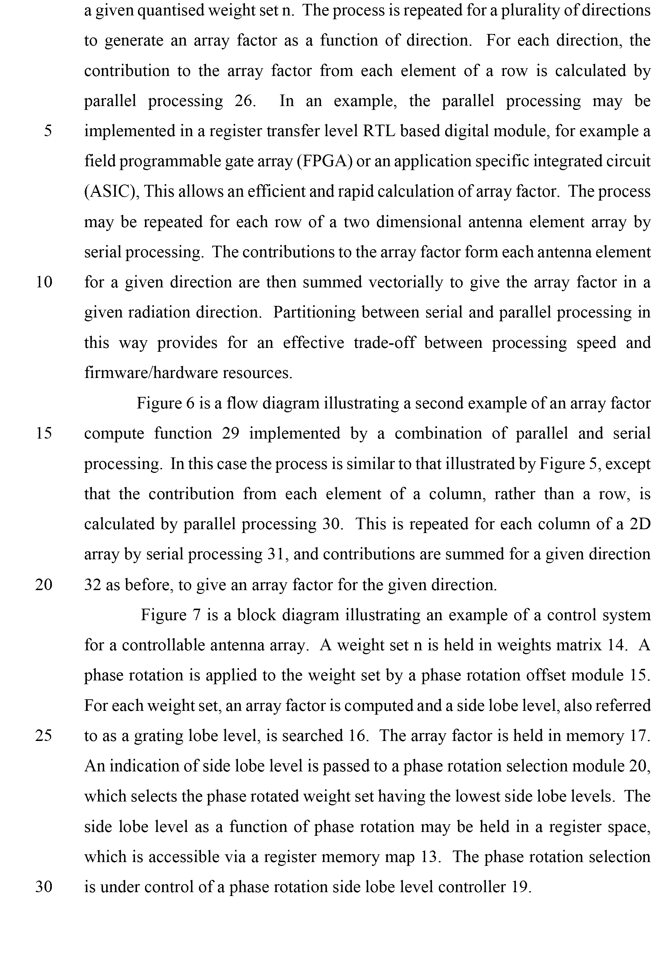

Figure 11 is a flow diagram of an example of a method of controlling a smart antenna system comprising a controllable antenna array having a plurality of antenna elements, by steps S11.1 to S11.5. Each antenna element has a phase shifter controllable by application of a quantised element weight value to control a transmission phase of a signal for transmission by the antenna element.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A smart antenna system comprising:

   a controllable antenna array comprising a plurality of antenna elements, each antenna element having a phase shifter controllable by application of a quantised element weight value to control a transmission phase of a signal for transmission by the antenna element;

   a control system configured to accept an indication of desired azimuth and elevation steering angle and to generate a processed weight set comprising a plurality of quantised element weight values, each quantised element weight value being for application to a respective phase shifter to cause the controllable antenna array to generate a beam in the direction of the desired azimuth and elevation steering angle,
   wherein the control system is configured to generate the processed weight set by:

generating an initial weight set from the indication of desired azimuth and elevation steering angle and from an indication of frequency;

generating a plurality of further weight sets from the initial weight set, the further weight sets each being for the same azimuth and elevation steering angle; and

for the initial weight set and for each of the plurality of further weight sets, generating a respective quantised wight set and generating an indication of side lobe level for each respective quantised weight set; and

selecting the processed weight set from the generated quantised weight sets on the basis of the indications of side lobe level.

2.  A smart antenna system according to claim 1, wherein the control system is configured to generate each of the plurality of further weight sets by adding a constant phase rotation for the respective further weight set to each element weight value of the initial weight set.

3.  A smart antenna system according to claim 2, wherein the constant phase rotation is incremented by a constant value between 1 and 10 degrees for each further weight set.

4.  A smart antenna according to claim 2 or claim 3, wherein the values of the respective constant phase rotations for the further weight sets are distributed evenly between 0 and 360 degrees.

5.  A smart antenna system according to any preceding claim, wherein generating the indication of side lobe level for each of the respective quantised weight sets comprises generating an array factor.

6.  A smart antenna system according to claim 5, wherein the control system comprises a register transfer level RTL based digital module to generate the array factor.

7.  A smart antenna system according to claim 6, wherein the antenna elements of the controllable antenna array are arranged a plurality of rows and a plurality of columns, and wherein the digital module is configured to generate the array factor by processing the weight values for each row in parallel or by processing the weight values for each column in parallel.

8.  A smart antenna system according to any preceding claim, wherein the control system is configured to generate the processed weight set in real time in response to receiving an indication of a desired azimuth and elevation steering angle.

9.  A method of controlling a smart antenna system comprising a controllable antenna array having a plurality of antenna elements, each antenna element having a phase shifter controllable by application of a quantised element weight value to control a transmission phase of a signal for transmission by the antenna element, the method comprising:

    receiving an indication of desired azimuth and elevation steering angle;

    in response to receiving the indication of desired azimuth and elevation steering angle, generating a processed weight set comprising a plurality of quantised element weight values, each quantised element weight value being for application to a respective phase shifter to cause the controllable antenna array to generate a beam in the direction of the desired azimuth and elevation steering angle, wherein generating the processed weight set is by:

    generating an initial weight set from the indication of desired azimuth and elevation steering angle and from an indication of frequency;

    generating a plurality of further weight sets from the initial weight set, the further weight sets each being for the same azimuth and elevation steering angle; and

    for the initial weight set and for each of the plurality of further weight sets, generating a respective quantised weight set and generating an indication of side lobe level for each respective quantised weight set; and

    selecting the processed weight set from the generated quantised weight sets on the basis of the indications of side lobe level.

10. A method according to claim 9, comprising generating each of the plurality of further weight sets by adding a constant phase rotation for the respective further weight set to each element weight value of the initial weight set.

11. A method according to claim 10, comprising incrementing the constant phase rotation by a constant value between 1 and 10 degrees for each further weight set.

12. A method according to claim 10 or claim 11, wherein the values of the constant phase rotations for the further weight sets are distributed evenly between 0 and 360 degrees.

13. A method according to any one of claims 9-12, wherein generating the indication of side lobe level for each of the respective quantised weight sets comprises generating an array factor.

14. A method according to claim 13, wherein the antenna elements of the controllable antenna array are arranged a plurality of rows and a plurality of columns, and the method comprises generating the array factor by processing the weight values for each row in parallel or by processing the weight values for each column in parallel.

15. A method according to any one of claims 9-14, comprising generating the processed weight set in real time in response to receiving an indication of desired azimuth and elevation steering angle.

## Smart Antenna System and Method of Operation of Smart Antenna System

### Technical Field

The present invention relates generally to a smart antenna system and to a method of operation of a smart antenna system, and in particular, but not exclusively, to a system and method for side lobe reduction in a smart antenna system comprising a controllable antenna array having a plurality of antenna elements, each antenna element being controllable by a quantised element weight value.

### Background

Modern wireless communication networks are typically placed under great demands to provide high data capacity within the constraints of the allocated signal frequency spectrum. To achieve a high data capacity, it is beneficial to transmit and receive signals with a high signal to noise ratio. To improve signal to noise ratio, increasing use is made of smart antenna systems comprising controllable antenna arrays, which typically comprise a number of antenna elements, each of which has a transmission phase and/or amplitude that is controllable by application of a respective antenna weight value. The antenna weight values may be generated to form a beam for transmission and/or reception in the direction of a desired azimuth and elevation steering angle, for example to receive a wanted signal and to reject other signals. Typically, a radiation pattern formed by the controllable antenna array is generated to form a main beam at a desired steering angle, but the radiation pattern may also have unwanted side lobes having a gain less than that of the main beam in other directions. The side lobes may receive signals other than the wanted signal which may reduce the signal to noise ration of the received wanted signal.

It would be beneficial to provide a smart antenna system having reduced side lobe levels.

alues, each quantised element weight value be

e phase shifter to cause the controllable antenna a

rection of the desired azimuth and elevation stee

ystem is configured to generate the processed w

weight set from the indication of desired azimut

d from an indication of frequency; generating a pl

n the initial weight set, the further weight sets e

and elevation steering angle; and for the initial w

ility of further weight sets, generating a respect

erating an indication of side lobe level for eac

et; and selecting the processed weight set from

ets on the basis of the indications of side lobe lev

Generating a plurality of different quantised weig

izimuth and elevation steering angle has the effe

ng similar but slightly different radiation patter

es from an ideal weight set introduced by qua

may have similar main beam gain, but diff

ng an indication of side lobe level for each resp

g a control processor and selecting a weight s

n of side lobe level allows a weight set to be ap

array that has reduced side lobe levels. This all

tion of the phase applied by the quantised w

tion in steps of 45 degrees or greater, for exa

viding good side lobe performance.

In an example, the control system is configured to generate each of

irality of further weight sets by adding a constant phase rotation for

spective further weight set to each element weight value of the initial wei

..

Adding a constant phase rotation, which may be positive or negative

ch element weight value has the effect, in the absence of quantisation effects

ier imperfections, of keeping the radiation pattern the same and sim

anging the transmission phase of the beam that is formed. This allows

sired azimuth and elevation direction to be maintained, while generat

ghtly different patterns that may have different side lobe levels due

antisation effects or the effects of other imperfections.

In an example, the constant phase rotation is incremented by a const

lue between for each further weight set, the increment having a constant va

example between 1 and 10 degrees for each weight set, for example 5 c

grees. The values of the respective constant phase rotations for the furt

ight sets may be distributed evenly between 0 and 360 degrees. For exam

re may be 45 steps of 8 degrees giving 45 weight sets with rotations in a ra

360 degrees. This provides an efficient method of generating the further wei

s having the same desired azimuth and elevation angle but differ

antisation effects.

In an example, generating the indication of side lobe level for each of

spective quantised weight sets comprises generating an array factor. The ar

:tor is typically based the intended frequency of operation for weight set a

relative positions of the antenna elements, assuming isotropic radiation fr

antenna element. This allows for an efficient calculation, which may

rformed in a limited time period between a change in desired azimuth a

vation angle and/or frequency. The array factor may be sufficient to indic

iich weight set has the lowest sidelobe levels, without needing to calculate

elements, thereby saving computational resources.

In an example, the control system comprises a register transfer level RTL based digital module to generate the array factor. For example, the control system may be implemented by a field programmable gate array (FPGA) or an application specific integrated circuit (ASIC). This allows an efficient and rapid calculation of array factor.

In an example, the antenna elements of the controllable antenna array are arranged a plurality of rows and a plurality of columns, and the digital module is configured to generate the array factor by processing the weight values for each row in parallel, or alternatively or in addition, by processing the weight values for each column in parallel. Partitioning between serial and parallel processing in this way provides for an effective trade-off between processing speed and firmware/hardware resources.

In an example, the control system is configured to generate the processed weight set in real time in response to receiving an indication of a desired azimuth and elevation steering angle and/or frequency.

This provided a resource-efficient and flexible system.

In accordance with a second aspect of the invention, there is provided a method of controlling a smart antenna system comprising a controllable antenna array having a plurality of antenna elements, each antenna element having a phase shifter controllable by application of a quantised element weight value to control a transmission phase of a signal for transmission by the antenna element, the method comprising: receiving an indication of desired azimuth and elevation steering angle; in response to receiving the indication of desired azimuth and elevation steering angle, generating a processed weight set comprising a plurality of quantised element weight values, each quantised element weight value being for application to a respective phase shifter to cause the controllable antenna array to generate a beam in the direction of the desired azimuth and elevation steering angle, wherein generating the processed weight set is by: generating an initial weight set from the indication of desired azimuth and elevation steering angle and

of further weight sets, generating a respective quantised weight set and ge

an indication of side lobe level for each respective quantised weight

selecting the processed weight set from the generated quantised weight se

basis of the indications of side lobe level.

Further features of the invention will be apparent from the f

description of preferred embodiments of the invention, which are given

of example only.

Brief Description of the Drawings

Figure 1 is a schematic diagram illustrating a smart antenna

comprising a controllable antenna array and a control system;

Figure 2 is a schematic diagram illustrating generation of furthe

sets from an initial weight set by rotation of the phase of each weight in

set by the same amount;

Figure 3 is a schematic diagram of the controllable antenna array

antenna elements having a radiating element and a phase shifter to co

transmission phase of transmitted and/or received signals;

Figure 4 is a flow diagram illustrating an example of an arra

compute and grating lobe search function;

Figure 5 is a flow diagram illustrating a first example of an arra

compute function implemented by a combination of parallel and serial pro

Figure 6 is a flow diagram illustrating a second example of an arra

compute function implemented by a combination of parallel and serial pro

Figure 7 is a block diagram illustrating an example of a control sy

a controllable antenna array;

Figure 8 is a schematic diagram illustrating an example of implem

of an array factor compute module;

in azimuth and elevation showing a side lobe level of -10.13 dB after v

selection; and

Figure 11 is a flow diagram of a method of controlling a smar

system comprising a controllable antenna array having a plurality o

elements, each antenna element having a phase shifter controllable by ap

of a quantised element weight value to control a transmission phase o

for transmission by the antenna element.

Detailed Description

By way of example, embodiments of the invention will now be

in the context of a smart antenna system for operation in frequency ba

region of 4 – 8 GHz, and in particular at 5 GHz, but it will be unders

embodiments of the invention are not restricted to operation in this range

smart antenna systems may be designed to operate at higher or lower fre

Figure 1 illustrates a smart antenna system comprising a co

antenna array 1 and a control system 3 for the antenna array. In add

smart antenna system may also comprise additional components and fea

example for determining a desired azimuth and elevation direction and

frequency. The controllable antenna array 1 comprises a number o

elements 2, each antenna element 2 having an analogue phase shifter co

by application of a quantised element weight value to control a transmiss

of a signal for transmission by the antenna element. The quantised weigh

value may be coarsely quantised, for example to select a phase in 60 deg

having 6 states to cover 360 degrees. This may be controlled by a 3 b

The advantage of such coarse quantisation is that it may be efficiently an

implemented, for example by selection of alternative path lengths

frequency switches. However, the coarse quantisation may lead

distortion from an intended radiation pattern that would result fro

magnitude of the radiation pattern. Side lobes are generally unwanted and may degrade a signal to noise of a wanted signal by receiving interference signals, and on transmit, the side lobes may radiate signals in unintended directions. It is therefore beneficial to reduce side lobe levels where possible.

As described in this disclosure, an initial weight set is generated to produce a radiation pattern having a main beam in an intended direction. The initial weight set is then used to generate further weight sets having a main beam in the same direction as for the initial weight set, but using different weight values. The different weight values may be generated by adding a constant phase offset to each element value, using a different constant phase offset for each further weight set. This will generate the same pattern, for ideal weights before quantisation, but uses weights that may fall differently with respect to quantisation thresholds. As a result, although the main beam will be close to the same direction for each further weight set, the exact shape of the radiation pattern, and in particular the side lobe levels, may be different. The constant phase offset will cause a change in transmission phase, but this is generally of little consequence.

As described in this disclosure, a side lobe level is calculated for each quantised weight set, and a quantised weight set is selected for application to the controllable antenna array on the basis of the side lobe level, for example the weight set having the lowest magnitude side lobe in an array factor pattern may be selected. The calculation and selection may be performed in real time in a period between selection of a new desired azimuth, elevation and frequency for a main beam and application of the selected quantised weight set to the controllable antenna array. For speed and efficiency of implementation, the array factor may be calculated by a register transfer level RTL based digital module to generate the array factor. For example, the calculation may be implemented by a field programmable gate array (FPGA) or an application specific integrated circuit (ASIC) using parallel processing.

In the example illustrated in Figure 1, the antenna array has 48 antenna elements 2 arranged as six rows and eight columns. However, this example has been chosen for illustration purposes and examples are not limited to this, and other numbers and arrangements of antenna elements are possible within the scope of the disclosure. The antenna elements in the array may be spaced apart by nominally half a wavelength, or in examples by less than half a wavelength to give a more compact array.

As shown in Figure 1, the control system 3 is configured to accept an indication of desired azimuth and elevation steering angle and/or frequency and to generate 4 an initial weight set 5 from the indication of desired azimuth and elevation steering angle and from an indication of frequency. The initial weight set 5 may be generated by calculation based on the geometric relationship between antenna elements and the phase shifts required to give reinforcing interference in the direction of the desired steering angle, for example. The initial weigh set may also be generated using a look up table of pre-calculated values in another example.

A plurality of further weight sets 6, 7, 8 are generated from the initial weight set 5, the further weight sets each being for the same azimuth and elevation steering angle. The further weight sets may be generated by adding or subtracting a phase offset to the initial weight set, or to another of the further weight sets. A respective quantised weight set is generated for the initial weight set and for each of the plurality of further weight sets, for example quantising the weight for each antenna element to steps a certain phase change, for example greater than 20 degrees, greater than 45 degrees, or for example nominally a 60 degree step. For each quantised weight set, an indication of side lobe level is generated 9. A weight set is selected 10 from the generated quantised weight sets on the basis of the indications of side lobe level. For example, the weight set giving the lowest indication of maximum sidelobe level may be selected. The selected quantised weight set is then used as the processed weight set to control the controllable antenna array 1.

geometrically calculated factor based the intended frequency of operation for the weight set and the relative positions of the antenna elements, which typically does not take into account the radiation response of an individual antenna element. Calculating the radiation pattern would involve the multiplication of the element response pattern with the array factor for a given direction. Using the array factor to calculate side lobe level, rather than calculating the radiation pattern, allows for an efficient calculation, which may be performed in a limited time period between a change in desired azimuth and elevation angle and/or frequency. The actual phase shift associated with a quantised value may depend on frequency, and on which quantised phase value is selected, due to various inaccuracies in the generation of the analogue phase shift value. A look up table may hold a calibrated value of phase shift for each quantised step for each frequency. The look up table may be used to generate the phase shifts for the quantised weight set used to calculate the array factor. The array factor accordingly provides an accurate estimation of sidelobe level, taking into account inaccuracies in the analogue beamformer applying the quantised phase shifts, and the unevenness and frequency dependence of the quantisation steps.

Figure 2 illustrates the generation of the further weight sets 6, 7 by rotation of the initial weight set values, that is to say by applying a positive or negative phase rotation. The phase rotation is incremented by a constant value between for each further weight set, the increment having a constant value for example between 1 and 10 degrees for each weight set, for example 5 degrees. The values of the respective constant phase rotations for the further weight sets may be distributed evenly between 0 and 360 degrees. For example, there may be 45 steps of 8 degrees giving 45 weight sets with rotations in a range of 360 degrees. This provides an efficient method of generating the further weight sets having the same desired azimuth and elevation angle but different quantisation effects. The increment may be in the magnitude of the phase change between the further weight sets. The phase change may have a positive or negative sign.

Figure 3 is a schematic diagram of the controllable antenna array showing antenna elements 2a, 2b, 2c having a radiating element 11a, 11b, 11c and a phase shifter 12a, 12b, 12c to control the transmission phase of transmitted and/or received signals. In other examples, the weight value w1, w2, wn applied may be a magnitude and phase weight, for example applied as inphase and quadrature components. The element signals are combined together as shown using a splitter/combiner as appropriate for transmit/receive. The radiating elements 11a, 11b, 11c may be patch antenna elements, or may be other types of antenna element such as dipoles in other examples. The radiating elements may be used in examples for transmission or reception of signals.

Figure 4 is a flow diagram illustrating an example of an array factor compute and grating lobe search function. For a given weight set n, which may be an initial weight set or a further weight set, a quantised weight set n is generated 21, by applying quantisation thresholds corresponding to control steps of the phase shifter elements of the antenna array elements. For each of a number of directions in a radiation pattern, a contribution to an array factor is calculated 22 from each weighted antenna element. For each direction in the radiation pattern, the calculated contributions are summed 23. The summed contributions are searched 24 at each of the plurality of directions for a maximum sidelobe level for the quantised weight set n. An indication is produced of the maximum sidelobe level for the quantised weight set n. In an example, the plurality of directions over which the side lobe search takes place are distributed evenly over the radiation pattern. The maximum side lobe level, i.e. a peak in the radiation pattern outside the main beam, is detected. In another example, the plurality of directions that are searched are directions where a sidelobe is expected, for example on the basis of a previous detected sidelobe for another weight set, or by calculation of a position where a grating lobe may be expected due to the geometry of the array. This may lead to a more efficient search process.

Figure 5 is a flow diagram illustrating a first example of an array factor compute function 25 implemented by a combination of parallel and serial processing. In this example, the array factor for a given direction is calculated for a given quantised weight set n. The process is repeated for a plurality of directions to generate an array factor as a function of direction. For each direction, the contribution to the array factor from each element of a row is calculated by parallel processing 26. In an example, the parallel processing may be implemented in a register transfer level RTL based digital module, for example a field programmable gate array (FPGA) or an application specific integrated circuit (ASIC), This allows an efficient and rapid calculation of array factor. The process may be repeated for each row of a two dimensional antenna element array by serial processing. The contributions to the array factor form each antenna element for a given direction are then summed vectorially to give the array factor in a given radiation direction. Partitioning between serial and parallel processing in this way provides for an effective trade-off between processing speed and firmware/hardware resources.

Figure 6 is a flow diagram illustrating a second example of an array factor compute function 29 implemented by a combination of parallel and serial processing. In this case the process is similar to that illustrated by Figure 5, except that the contribution from each element of a column, rather than a row, is calculated by parallel processing 30. This is repeated for each column of a 2D array by serial processing 31, and contributions are summed for a given direction 32 as before, to give an array factor for the given direction.

Figure 7 is a block diagram illustrating an example of a control system for a controllable antenna array. A weight set n is held in weights matrix 14. A phase rotation is applied to the weight set by a phase rotation offset module 15. For each weight set, an array factor is computed and a side lobe level, also referred to as a grating lobe level, is searched 16. The array factor is held in memory 17. An indication of side lobe level is passed to a phase rotation selection module 20, which selects the phase rotated weight set having the lowest side lobe levels. The side lobe level as a function of phase rotation may be held in a register space, which is accessible via a register memory map 13. The phase rotation selection is under control of a phase rotation side lobe level controller 19.